# EUROPÄISCHE PATENTSCHRIFT

(11) **EP 0 549 082 B1**
(45) Veröffentlichungstag und Bekanntmachung des Hinweises auf die Patenterteilung: **18.12.1996**
(21) Anmeldenummer: 92250076.4
(22) Anmeldetag: 01.04.1992
(51) Int. Cl.: B60N 2/06, B60N 2/02

(54) **Schienenführung**
Rail guide
Glissière

(30) Priorität: 13.12.1991 DE 4141200; 09.01.1992 DE 4200355
(43) Veröffentlichungstag der Anmeldung: 30.06.1993
(73) Patentinhaber: Brose Fahrzeugteile GmbH & Co. KG, 96450 Coburg (DE); ALUMINIUM RANSHOFEN EUROMOTIVE Ges.m.b.H., A-5282 Ranshofen (AT)
(72) Erfinder: Brandt, Carsten, W-8636 Weidach (DE); Kliese, Anja, W-8630 Coburg (DE); Rampel, Hans, W-8637 Ahorn-Schorkendorf (DE)
(74) Vertreter: Ninnemann, Detlef, Dipl.-Ing.

(56) Entgegenhaltungen:
- EP-A- 0 169 097
- EP-A- 0 311 478
- DE-A- 2 004 504
- FR-A- 2 087 367
- US-A- 1 987 431
- US-A- 3 184 209

## Beschreibung

Die Erfindung bezieht sich auf eine Schienenführung gemäß dem Oberbegriff der Ansprüche 1 und 2.

Eine derartige Schienenführung ist aus der DE-A-3 613 832 (A1) bekannt und besteht aus einer stationären Außenschiene, in der eine gegenüber der Außenschiene gleitend verschiebbar gelagerte Innenschiene angeordnet ist, die über Anlenkpunkte mit dem Sitzrahmen beipielsweise eines Kraftfahrzeugsitzes verbunden ist. Die Verstellung der Innenschiene gegenüber der Außenschiene erfolgt manuell oder bei elektrisch verstellbaren Sitzen über ein Schnecken-Gewinde-Antriebssystem, mit dem die motorisch aufgebrachten Verstellkräfte auf die Innenschiene übertragen werden.

Das Schnecken-Gewinde-Antriebssystem weist zwar eine Selbsthemmung auf, die aber in vielen Fällen unzureichend ist, wenn die bei Unfällen entstehenden hohen Massenbeschleunigungskräfte vom Fahrzeugsitz auf die Innenschiene und von dort über die Außenschiene in das Bodenblech übertragen werden müssen. Durch die Integration der Gurtverankerungspunkte in den Fahrzeugsitz werden die Massenbeschleunigungskräfte infolge des Gewichts der auf dem Fahrzeugsitz befindlichen Person noch deutlich erhöht, so daß bei elektrisch verstellbaren Sitzen die Haltekraft der Antriebselemente nicht ausreicht.

Aus diesem Grunde ist bei der bekannten Schienenführung eine zusätzliche lastübertragende Blockiereinrichtung innerhalb der Schienenführung vorgesehen, die aktiviert wird, wenn eine Beschleunigung bzw. Verzögerung auf die Schienenführung einwirkt, die ein vorgegebenes Maß übersteigt. Hierfür weist die aus einem U-Profil bestehende Innenschiene an einem Schenkel einen als Bremsschiene dienenden Steg auf, der mit einer Verzahnung versehen ist, über die der Antrieb der Innenschiene mittels einer Verstellschnecke bewerkstelligt wird.

Alternativ hierzu ist die Außenschiene mit einem Klemmkeil verbunden, der nach Überschreiten einer vorgegebenen Beschleunigung an einer Führungsschrägen gegen den Steg der Innenschiene gelangt und eine Klemmblockierung bewerkstelligt. Dabei kann die Klemmfläche des Klemmkeils eine rauhe oder sägezahnartige Oberfläche bzw. einen Bremsbelag aufweisen, um die Blockierungswirkung zu verstärken.

Das Wirksamwerden der Blockiervorrichtung bei der bekannten Schienenführung setzt voraus, daß die Innen- und Außenschiene auch bei den unfallbedingt auftretenden hohen Massenbeschleunigungskräften fest miteinander in Eingriff bleiben, damit die Verstellschnecke mit der Stegverzahnung bzw. der Klemmkeil mit dem Steg in Eingriff bleibt.

Aufgrund des notwendigen Spiels zwischen der Innen- und Außenschiene für die Längsgleitbewegung der Innenschiene sind jedoch geringfügige Bewegungen der Innenschiene gegenüber der Außenschiene quer zur Längsverstellrichtung der Innenschiene möglich, infolgedessen die Verstellschnecke oder die Blockiereinrichtung außer Eingriff mit dem Steg der Innenschiene gerät, so daß eine ungebremste Bewegung der Innenschiene infolge der bei einem Unfall auftretenden Massenbeschleunigungskräfte erfolgt.

Die gleichen Verhältnisse liegen bei einem elektrisch verstellbaren Fahrzeugsitz mit einem Schnecken-Getriebe-Antriebssystem vor, bei dem die Innenschiene mit der Verstellschnecke verbunden ist, die in der mit der Außenschiene verbundenen Längsverzahnung kämmt. Auch bei dieser Schienenführungs-Verstellvorrichtung kommt es beim Auftreten unfallbedingter Massenbeschleunigungskräfte sowie infolge des zwischen Innen- und Außenschiene notwendigen Spiels für die Längsgleitbewegung der Innenschiene zu einem Anheben der Innenschiene gegenüber der Außenschiene und infolgedessen zu einem Lösen des Eingriffs zwischen der Verstellschnecke und der Außenschienenverzahnung, so daß die Innenschiene und damit der daran befestigte Fahrzeugsitz eine unkontrollierte Bewegung durchführt, die zu erheblichen Verletzungen der auf dem Fahrzeugsitz befindlichen Person führen kann.

Aus der EP-A-0 169 097 ist eine Schienenführung zum manuellen oder motorischen Verstellen einer mit einem Sitz verbundenen Oberschiene gegenüber einer ortsfesten Zahnstange bekannt, bei der innerhalb eines Gehäuses eine Schnecke angeordnet ist, durch deren Betätigung die Verstellung der Oberschiene mit dem Sitz in eine gewünschte Position erfolgt. Da die Schnecke nicht selbsthemmend ist, sind in dem Gehäuse zwei tangential zur Schnecke elektromotorisch, pneumatisch, hydraulisch, magnetisch oder dergleichen bewegliche Bremsschuhe angeordnet, die an der Außenperipherie der Schnecke anliegen und diese je nach Stellung der Bremsschuhe blockieren, das heißt ein Drehen der Schnecke verhindern und in der blockierten Stellung einen Eingriff der Schnecke in die Zahnstangenverzahnung gewährleisten oder diese zur Sitzverstellung freigeben.

Aufgabe der vorliegenden Erfindung ist es, eine Schienenführung der eingangs genannten Gattung anzugeben, die bei geringem fertigungstechnischen Aufwand eine sichere Arretierung der beiden Schienen der Schienenführung auch beim Auftreten hoher Massenbeschleunigungskräfte gewährleistet.

Diese Aufgabe wird erfindungsgemäß durch die kennzeichnenden Merkmale der nebengeordneten Ansprüche 1 und 2 gelöst.

Die erfindungsgemäßen Lösungen stellen sicher, daß auch beim Auftreten von vor allem unfallbedingten hohen Massenbeschleunigungskräften nur eine solche Bewegung der Innenschiene gegenüber der Außenschiene quer zur Schienenlängsrichtung möglich ist, die stets einen Eingriff des Verstellelements in die an der Außenschiene angeordnete Verzahnung gewährleistet. Dadurch wird eine unkontrollierte Bewegung der Innenschiene in Schienenlängsrichtung und damit eine Gefährdung einer auf dem Fahrzeugsitz befindlichen Person vermieden, ohne daß zusätzliche, fertigungstechnisch aufwendige Maßnahmen notwendig sind, die die Innenschiene gegenüber der Außenschiene bzw. die geführte Schiene gegenüber der führenden Schiene festlegen.

Der Anschlag kann alternativ aus einem Widerlager oder einer zusätzlichen Verzahnung bestehen, wobei letztere getrennt von der der Verstellung dienenden Verzahnung angeordnet und/oder einstückig mit dieser verbunden ist und
a) mit der der Verstellung dienenden Verzahnung übereinstimmt oder
b) übereinstimmende Bereiche mit der der Verstellung dienenden Verzahnung aufweist oder
c) ausschließlich zur Aufnahme von Crashkräften bestimmt und geeignet ist.

Das Widerlager bzw. die zusätzliche Verzahnung dient der Aufnahme der Massenbeschleunigungs- bzw. Crashkräfte und verhindert ein Verlassen des Kämmeingriffs zwischen dem mit der geführten Schiene verbundenen Verstellelement und der mit der führenden Schiene verbundenen Verzahnung bzw. stellt einen minimalen Eingriff zwischen Verstellelement und Verzahnung beim Auftreten der Crashkräfte sicher, so daß die Crashkräfte entweder über die Verzahnung zur Übertragung der Verstellkräfte und/oder über die zusätzliche Verzahnung zur ausschließlichen Aufnahme der Crashkräfte gewährleistet wird.

Die Auswahl zwischen einem oder mehreren Widerlagern einerseits sowie einer oder mehreren Verzahnungen zur Aufnahme der Crashkräfte andererseits und deren Anordnung im Querschnittsprofil der die Verzahnung tragenden Schiene läßt mehrere Ausführungsformen zu.

In einer ersten Ausführungsform ist der Anschlag einteilig mit der Verzahnung verbunden, wobei vorzugsweise das Verstellelement aus einer Verstellschnecke besteht, die in ein im wesentlichen U-förmiges Schneckenprofil über einen Eingriffswinkel von ca. 180° eingreift und wobei der Anschlag als geradlinige Fortsetzung der Enden des U-förmigen Schneckenprofils ausgebildet ist.

Durch die Schenkelverlängerung wird ein Eingriff der Außenverzahnung der Verstellschnecke in die Verzahnungsnuten der Schneckenverzahnung auch dann gewährleistet, wenn die Verstellschnecke um ein gewisses Maß aus dem unteren Bereich der Verzahnung herausgehoben wird, da infolge des Einwirkens der Crashkräfte eine Trennung der geführten Schiene von der führenden Schiene um dieses Maß erfolgt. Die Schenkelverlängerung dient im Normalbetrieb nicht zur Aufnahme von Verstellkräften, sondern wird lediglich im Crashfall wirksam, da sie ein Durchrutschen der Verstellschnecke über die Schneckenverzahnung und damit eine unkontrollierte Bewegung der geführten Schiene gegenüber der führenden Schiene verhindert.

Der mindestens eine Anschlag zur Aufnahme von Crashkräften kann aber auch getrennt von der Verzahnung angeordnet werden, wobei er entweder als Widerlager die Funktion einer Auslenkbegrenzung des Verstellelements wahrnimmt oder im Falle des Verzahnungs-Eingriffs eine Verbindung zur führenden Schiene auch im Crashfall herstellt und damit eine unkontrollierte Bewegung des Verstellelements verhindert.

Es sind auch zwei im Querschnittsprofil der die Verzahnung aufweisenden Schiene im wesentlichen einander gegenüberliegende Anschläge möglich, von denen der eine Anschlag als Widerlager und der andere Anschlag als Verzahnung ausgebildet ist, die entweder über die gesamte Länge bzw. den gesamten Winkelabschnitt oder über Teile davon mit der der Verstellung dienenden Verzahnung übereinstimmt oder getrennt von dieser angeordnet ist.

In Abhängigkeit von der Konstruktion der Schienenführung, den verwendeten Materialien, der Anbringung des Verstellmechanismus usw. können der Anschlag und die Verzahnung auf einer senkrechten Achse übereinander, auf einer waagerechten Achse nebeneinander oder auf einer diagonalen Achse zueinander angeordnet sein.

Die Verzahnung kann Teil einer Ausformung eines Strangpreßprofils sein oder durch Falze oder Ausstellungen einer Schiene aus Stahlblech gebildet werden.

Die Verzahnung selbst wie auch der Anschlag können durch Prägen, Rändeln, Stanzen oder Fräsen der dafür vorgesehenen Schienenbereiche hergestellt werden.

Alternativ hierzu kann die Verzahnung aus einem Einlegeteil vorzugsweise aus Kunststoff bestehen, das in die die Verzahnung aufweisende Schiene eingesetzt ist. Dabei kann sich die Verzahnung zur Aufnahme der Verstellkräfte des Einlegeteils wenigstens auf einer Seite bis in den Bereich der horizontalen Achse des Verstellelements erstrecken.

Eine weitere Variante besteht darin, daß der Verzahnung des Einlegeteils im Bereich der horizontalen Achse des Verstellelements gegenüber eine weitere Verzahnung bzw. ein Widerlager zur Aufnahme der Crashkräfte sich befindet.

Des weiteren kann das Einlegeteil zur Aufnahme der Verstellkräfte ausschließlich mit dem unteren Teil des Verstellelements in Eingriff stehen, während dem Verstellelement in der horizontalen Ebene Verzahnungen zur Aufnahme der Crashkräfte zugeordnet sind.

Anhand eines in der Zeichnung dargestellten Ausführungsbeispieles soll der der Erfindung zugrundeliegende Gedanke näher erläutert werden.

Es zeigen:
- Figur 1: eine schematisch-perspektivische Darstellung einer Schienenführung mit einer eine Verzahnung tragenden Schiene und einer mit einem Verstellelement verbundenen Schiene;
- Figur 2: einen Querschnitt durch die Schienenführung gemäß Figur 1;
- Figuren 3 - 6: einen Querschnitt durch eine die Verzahnung in Form eines Einlegeteils tragenden Schiene mit einem Widerlager bzw. zusätzliche Verzahnungen zur Aufnahme von Crashkräften;
- Figuren 7 - 11: Querschnitte durch verschiedene Schienen-Strangpreßprofile mit Verzahnungen zur Übertragung der Verstellkräfte sowie Widerlagern bzw. zusätzlichen Verzahnungen zur Aufnahme der Crashkräfte;
- Figur 12: eine schematisch-perspektivische Darstellung einer Schienenführung mit Stahlblechschienen mit einem geprägten, gerändelten oder gestanzten Verzahnungsbereich;
- Figur 13: einen Querschnitt durch die Schienenführung gemäß Figur 12;
- Figur 14: einen Querschnitt durch eine Stahlblechschiene mit einem Einlegeteil zur Aufnahme von Verstellkräften und zusätzlichen Laschen zur Aufnahme von Crashkräften;
- Figuren 15 - 18: Querschnitte durch verschiedene Ausführungsformen von Stahlblechschienen mit laschenförmigen Ausstellungen zur Aufnahme von Verstellkräften und Laschen bzw. Widerlagern zur Aufnahme von Crashkräften.

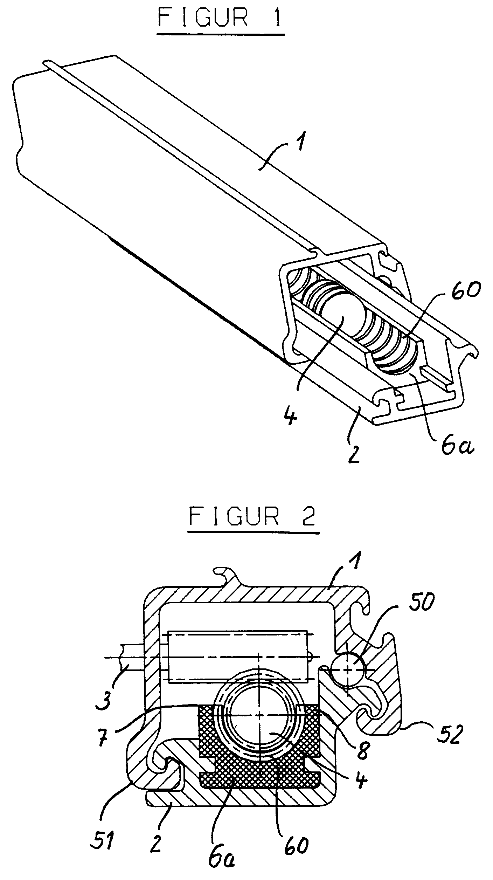

Figur 1 zeigt eine schematisch-perspektivische Darstellung einer Schienenführung mit einer führenden Schiene 2 und einer geführten Schiene 1, die beispielsweise für die Längsverstellung von Kraftfahrzeugsitzen eingesetzt wird. In diesem Fall ist die geführte Schiene 1 mit dem Sitzaufbau verbunden, während die führende Schiene 2 mit dem Boden eines Kraftfahrzeugs und damit fahrzeugfest verbunden ist.

Beide Schienen weisen ein U-förmiges Profil auf, dessen Schenkel mit Gleit- und Verhakungsflächen versehen sind, so daß die geführte Schiene 1 einerseits in Längsrichtung gegenüber der führenden Schiene 2 gleitend verstellt werden kann und andererseits eine Trennung der Schienen 1, 2 senkrecht zur Längserstreckung der Schienen 1, 2 durch die Verhakungsbereiche verhindert wird.

Die Verstellung der geführten Schiene 1 gegenüber der führenden Schiene 2 erfolgt mittels einer Verstellmechanik, die entweder manuell oder motorisch angetrieben wird. Im dargestellten Ausführungsbeispiel ist eine Getriebeanordnung für eine motorische Verstellung der geführten Schiene 1 gegenüber der führenden Schiene 2 vorgesehen, die aus einer Verstellschnecke 4 und einer Schneckenverzahnung 60 besteht. Die Verstellschnecke 4 ist über ein Schneckenrad mit einem Antrieb verbunden und fest mit der geführten Schiene 1 gekoppelt.

Die Schneckenverzahnung 60 ist in einem Einlegeteil 6 vorzugsweise aus Kunststoff angeordnet, das in die führende Schiene 2 eingesetzt und fest mit dieser verbunden ist. Wie nachfolgende Ausführungsbeispiele zeigen werden, ist die Verzahnung in der führenden Schiene 2 nicht nur als Einlegeteil auszubilden, sondern kann auch unmittelbar in der führenden Schiene 2 ausgebildet sein.

Figur 2 zeigt einen Querschnitt durch die Schienenführung gemäß Figur 1 und verdeutlicht die Zuordnung und geometrische Anordnung des aus einem Schneckenrad 3, einer Verstellschnecke 4 und eines Verzahnungsprofils 60 bestehenden Verstellgetriebes, das bezüglich des Schneckenrades 3 und der Verstellschnecke 4 fest mit der geführten Schiene 1 und bezüglich des Verzahnungsprofils 60, das in einem Einlegeteil 6a ausgeprägt ist, fest mit der führenden Schiene 2 verbunden ist. Die aus U-förmigen Profilen aufgebauten Schienen 1, 2 weisen Verhakungsbereiche 51, 52 auf, die ein Trennen der Schienen 1, 2 beim Auftreten von Crashkräften, das heißt senkrecht zur Längserstreckung der Schienen auftretenden Massenbeschleunigungskräften entgegenwirken.

Über Gleit- oder Wälzlager 50 wird eine reibungsarme Längsverstellung der geführten Schiene 1 gegenüber der führenden Schiene 2 gewährleistet.

Figur 2 verdeutlicht die Konfiguration des Einlegeteils 6a, das das Verzahnungsprofil 60 trägt und formschlüssig sowie gegebenenfalls kraftschlüssig mit der führenden Schiene 2, beispielsweise der Unterschiene eines Kraftfahrzeugsitzes, verbunden ist. Die Kräfte zur Verstellung der geführten Schiene 1 gegenüber der führenden Schiene 2 werden mittels des Schneckengetriebes 3, 4 gegenüber dem Verzahnungsprofil 60 aufgebracht, so daß das Verzahnungsprofil 60 zur Aufnahme dieser Verstellkräfte ausgelegt werden muß.

Treten zusätzliche Crashkräfte auf, die in Richtung auf eine Trennung der beiden Schienen 1, 2 auf diese einwirken, so besteht die Gefahr, daß aufgrund der Verbindung des Schneckenrades und der Verstellschnecke 4 mit der geführten Schiene 1 einerseits und dem Verzahnungsprofil 60 bzw. des Einlegeteils 6a mit der führenden Schiene 2 andererseits die wechselseitige Verzahnung voneinander getrennt wird, so daß beim Einwirken von Beschleunigungskräften auf den mit der geführten Schiene 1 verbundenen Fahrzeugsitz dieser in Richtung der Beschleunigungskräfte schlagartig verstellt wird, so daß eine auf dem Fahrzeugsitz befindliche Person in höchstem Maße gefährdet ist.

Um sicherzustellen, daß ein ausreichender kämmender Eingriff der mit den beiden Schienen 1, 2 verbundenen Getriebeteile auch beim Auftreten von Crashkräften gewährleistet ist, sind konstruktive Maßnahmen erforderlich, die diesen Eingriff auch bei einem unvermeidlichen Anheben der geführten Schiene 1 gegenüber der führenden Schiene 2 infolge des auch in den Verhakungsbereichen 51, 52 vorhandenen Spiel bzw. bei einer Deformation der Verhakungsbereiche gewährleisten.

Eine derartige Maßnahme besteht in der Schienenführung gemäß den Figuren 1 und 2 in einer speziellen Ausgestaltung des Einlegeteils 6a, das eine tangentiale Schenkelverlängerung 7, 8 aufweist, so daß das Verzahnungsprofil 60 über einen Winkelbereich von 180° fest mit der Verzahnung der Verstellschnecke 4 in Eingriff steht, während die Schenkelverlängerung 7, 8 als zusätzlicher Verzahnungs-Eingriffsbereich vorgesehen ist, der im Crashfall wirksam wird, da in diesem Fall die Verstellschnecke 4 aus dem Verzahnungsprofil 60 angehoben wird und ohne Schenkelverlängerung 7, 8 außer Eingriff mit dem Verzahnungsprofil 60 gelangen könnte.

Durch die Schenkelverlängerung 7, 8 wird aber ein Eingriff der Außenverzahnung der Verstellschnecke 4 in die Verzahnungsnuten des Verzahnungsprofils 60 auch dann gewährleistet, wenn die Verstellschnecke 4 um ein gewisses Maß aus dem Verzahnungsprofil 60 herausgehoben wird, da infolge des Einwirkens der Crashkräfte eine Trennung der geführten Schiene 1 von der führenden Schiene 2 um dieses Maß erfolgt.

Bei diesem Ausführungsbeipiel besteht somit der Anschlag zur Aufnahme von Crashkräften aus einer Schenkelverlängerung 7, 8, die im Normalbetrieb nicht zur Aufnahme von Verstellkräften dient und lediglich im Crashfall wirksam wird, da sie ein Durchrutschen der Verstellschnecke 4 über das Verzahnungsprofil 60 und damit eine unkontrollierte Bewegung der geführten Schiene 1 gegenüber der führenden Schiene 2 verhindert. Dieser zusätzliche, nur teilweise in Eingriff mit der Verzahnung der Verstellschnecke 4 befindliche Teil des Einlegeteils 6a ist ein homogener Bestandteil des Verzahnungsprofils 60 und unmittelbar am Einlegeteil 6a ausgebildet, so daß durch diese konstruktive Maßnahme sowohl die zur Verstellung der geführten Schiene 1 gegenüber der führenden Schiene 2 zu übertragenden Verstellkräfte als auch im Crashfall die Massenbeschleunigungs- bzw. Crashkräfte aufgenommen werden können.

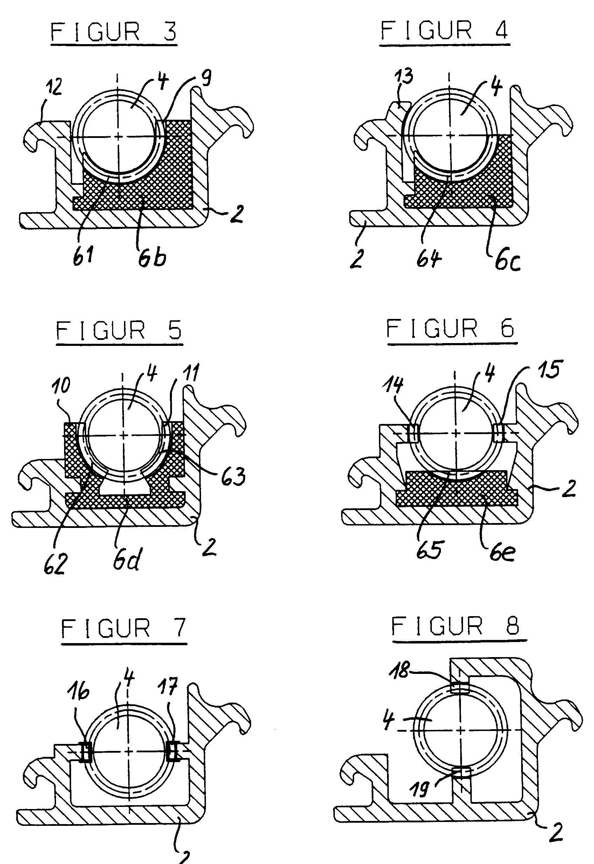

Figur 3 zeigt eine Variante der vorstehend dargestellten Lösung, bei der nur ein Schenkel des Einlegeteils 6b mit dem Verzahnungsprofil 61 tangential in Bezug auf die in das Verzahnungsprofil 61 eingesetzte Verstellschnecke 4 verlängert ist und einen Anschlag 9 in Form einer Eingriffsverzahnung für die Aufnahme von Crashkräften aufweist.

Um sicherzustellen, daß ein seitliches Ausweichen der Verstellschnecke 4 beim Einwirken von Crashkräften auf die geführte Schiene vermieden wird, weist die führende Schiene 2 ein zusätzliches Widerlager 12 auf, das die Bewegung der Verstellschnecke 4 aus der Zusatzverzahnung 9 heraus begrenzt und damit sicherstellt, daß die Verstellschnecke 4 nur eine Bewegung senkrecht zur Längserstreckung der führenden Schiene 2 durchführen kann, wobei das Maß der Verstellung nur soweit erfolgt, daß auch bei einem Auftreten von Massenbeschleunigungs- oder Crashkräften ein Eingriff der Verzahnung der Verstellschnecke 4 in die Zusatzverzahnung 9 gewährleistet ist und damit die Crashkräfte über die Zusatzverzahnung 9 aufgefangen werden und ein Durchrutschen der Verstellschnecke 4 vermieden wird.

Figur 4 zeigt eine Variante, bei der das Einlegeteil 6c keine die Crashkräfte aufnehmende Zusatzverzahnung sondern ausschließlich eine die Verstellkräfte aufnehmende Verzahnung 64 aufweist. Damit die Verstellschnecke 4 beim Auftreten von Crashkräften nicht aus der Verzahnung 64 herausgehoben wird, weist die führende Schiene 2 ein Widerlager 13 auf, das an seinem Ende bogenförmig um die Verstellschnecke 4 gelegt ist, so daß der Verzahnungseingriff zwischen der Verstellschnecke 4 und dem Verzahnungsprofil 64 des Einlegeteils 6 sichergestellt ist und die Verstellschnecke 4 gleichwohl problemlos in das Verzahnungsprofil 64 eingesetzt werden kann.

Figur 5 zeigt eine Variante gegenüber der Ausführungsform gemäß Figur 2, bei der das Einlegeteil 6d zwei Verzahnungsbereiche 62, 63 aufweist, zwischen denen eine verzahnungsfreie Zone ausgebildet ist. Die Verzahnungen 62, 63 gehen über in beide Schenkel, die tangential in Bezug auf die Verstellschnecke 4 verlaufen und Anschläge 10, 11 in Form von zusätzlichen Verzahnungen bilden, die ausschießlich zur Aufnahme von Crashkräften im Falle eines Anhebens der geführten Schiene gegenüber der führenden Schiene 2 dienen. Die Verstellkräfte zum Verstellen der geführten Schiene gegenüber der führenden Schiene 2 werden ausschießlich von dem Verzahnungsprofil 62, 63 des Einlegeteils 6d aufgenommen.

Figur 6 zeigt eine Ausführungsform, bei der das Einlegeteil 6e eine ebene, der Verstellschnecke 4 zugewandte Oberfläche mit einem eingeprägten Verzahnungsprofil 65 aufweist. Die führende Schiene 2 weist an ihren freien Schenkeln Anschläge 14, 15 auf, die als Verzahnung ausgebildet sind und in die Verzahnung der Verstellschnecke 4 eingreifen. Da nur das Verzahnungsprofil 65 des Einlegeteils 6e zur Aufnahme der Verstellkräfte dient, ist hier eine entsprechende Passung zwischen der Verzahnung der Verstellschnecke 4 und dem Verzahnungsprofil 65 des Einlegeteils 6e vorgesehen. Die Verzahnung der Anschläge 14, 15 kann dagegen ein großes Spiel aufweisen, so daß im Normalfall, das heißt zur Verstellung der geführten Schiene gegenüber der führenden Schiene 2 keine Berührung zwischen der Verzahnung der Verstellschnecke 4 und der Verzahnung der Anschläge 14, 15 auftritt.

Nur im Crashfall, das heißt bei einem durch das Abheben der geführten Schiene gegenüber der führenden Schiene 2 bedingten Anheben der Verstellschnecke 4 und damit einem außer Eingriff Geraten der Verzahnung der Verstellschnecke 4 mit dem Verzahnungsprofil 65 des Einlegeteils 6e greift die Verzahnung der Anschläge 14, 15 in die Verzahnung der Verstellschnecke 4 ein und verhindert ein Durchrutschen der Verstellschnecke 4 und damit der geführten Schiene in Schienenlängsrichtung.

Bei der Ausführungsform gemäß Figur 7 ist das in Figur 6 dargestellte Einlegeteil 6 fortgelassen worden, so daß die Anschläge 16, 17 in diesem Ausführungsbeispiel auch die Funktion der Aufnahme der Verstellkräfte zum Verstellen der geführten Schiene gegenüber der führenden Schiene 2 übernehmen. Die Anschläge 16, 17 sind als Stege ausgebildet, die in gleichem Abstand zur Bodenfläche des U-Profils der führenden Schiene 2 angeordnet und in den die Verstellschnecke 4 enthaltenden Innenraum gerichtet sind.

Durch die gegenüberliegende Anordnung der Anschläge 16, 17 wird ein seitliches Ausweichen der Verstellschnecke 4 beim Auftreten von Crashkräften vermieden und gleichzeitig bei einem Anheben der geführten Schiene gegenüber der führenden Schiene 2 senkrecht zur Längserstreckung der Schienen infolge der Breite bzw. Höhe der Anschläge 16, 17 ein Außereingriffgeraten der Verzahnung der Anschläge 16, 17 mit der Verzahnung der Verstellschnecke 4 verhindert. Dadurch wird vermieden, daß im Crashfall die Verstellschnecke 4 gegenüber der Verzahnung der führenden Schiene 2 durchrutschen und damit eine unkontrollierte Bewegung des mit der geführten Schiene verbundenen Fahrzeugsitzes auftreten kann.

Zur Verbesserung der Gleiteigenschaften kann die Verzahnung der Anschläge 16, 17 mit einer Kunststoffbeschichtung versehen werden, so daß die Doppelfunktion der Verzahnung der Anschläge 16, 17 optimiert durchgeführt werden kann, das heißt im Normalfall zur Aufnahme der Verstellkräfte eine geringe Reibung zwischen der Verzahnung der Verstellschnecke 4 und der Verzahnung der Anschläge 16, 17 gegeben ist und gleichwohl ein hinreichend fester Eingriff beim Auftreten von Crashkräften gewährleistet ist.

Figur 8 zeigt eine Variante gegenüber der Ausführungsform gemäß Figur 7, bei der die Anschläge 18, 19 senkrecht übereinander, das heißt in gleichem Abstand zu den Schenkeln der führenden Schiene 2 ausgebildet sind. Auch in diesem Fall sind die Anschläge 18, 19 als Stege ausgebildet, die in den freien Innenraum gerichtet sind und eine Verzahnung aufweisen, die in die Verzahnung der Verstellschnecke 4 eingreift.

Im Normalfall nimmt die Verzahnung der Anschläge 18, 19 die Verstellkräfte zum Verstellen der geführten Schiene gegenüber der führenden Schiene 2 auf, während bei einem Auftreten von Crashkräften durch die Breite der Stege sowie deren gegenüberliegende Anordnung gewährleistet ist, daß bei einem maximal zulässigen Maß der Verschiebung der Achse der Verstellschnecke 4 ein Eingriff der Verzahnung der Verstellschnecke 4 in die Verzahnung der Anschläge 18, 19 soweit gewährleistet ist, daß die auftretenden Crashkräfte abgefangen werden können, ohne daß eine unkontrollierte Längsbewegung der Verstellschnecke 4 und damit der geführten Schiene erfolgt.

In dem in Figur 8 dargestellten Ausführungsbeispiel kann der Anschlag 18 auch als Widerlager ausgebildet werden, das in geringem Abstand zum Außendurchmesser der Verstellschnekke 4 angeordnet ist und ein Ausweichen der Verstellschnecke 4 senkrecht zum Anschlag 19 verhindert.

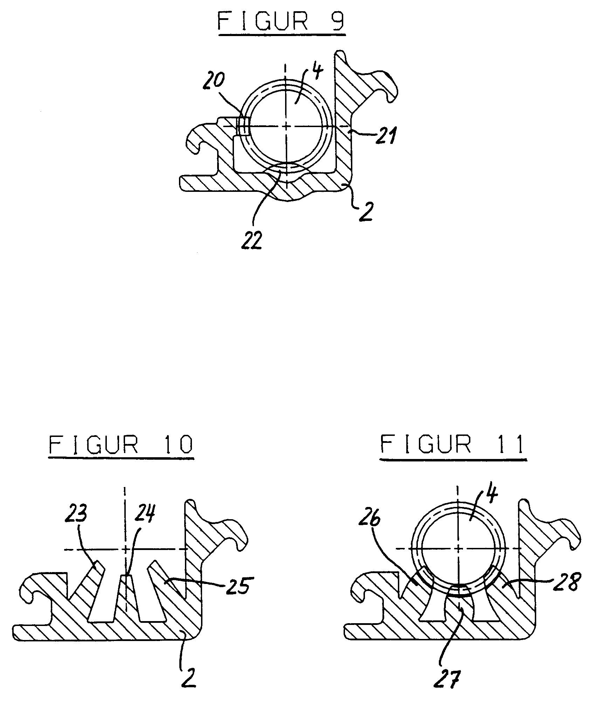

Figur 9 zeigt eine Variante, bei der das Verzahnungsprofil 22 zur Aufnahme der Verstellkräfte in den Verbindungsschenkel des im wesentlichen U-förmigen Profils der führenden Schiene 2 geprägt ist. Dieses geprägte Verzahnungsprofil greift in die Außenverzahnung der Verstellschnecke 4 zum Verstellen der geführten Schiene gegenüber der führenden Schiene 2 ein.

Im Crashfall besteht die Gefahr, daß die Außenverzahnung der Verstellschnecke 4 das geprägte Verzahnungsprofil 22 der führenden Schiene 2 verläßt, so daß ein Anschlag 20 mit einer Verzahnung, die in die Außenverzahnung der Verstellschnecke 4 eingreift, wirksam wird. Die Breite bzw. Höhe des Anschlages 20 ist dabei so bemessen, daß die Verzahnung dieses Steges auch dann in die Außenverzahnung der Verstellschnecke 4 eingreift, wenn das Verzahnungsprofil bereits verlassen wurde und damit eine unkontrollierte Längsbewegung der Verstellschnecke 4 infolge der Massenbeschleunigungskräfte auftreten würde.

Auch in dieser Ausführungsform kann die Verzahnung des Anschlages 20 so bemessen sein, das sie nur locker in die Außenverzahnung der Verstellschnecke 4 eingreift, da sie ausschießlich im Crashfall wirksam werden und dann ein Durchrutschen der Verstellschnecke 4 vermeiden muß. Der eine freie Schenkel der führenden Schiene 2 ist als Widerlager 21 ausgebildet, das in geringem Abstand von der Außenfläche der Verstellschnecke 4 angeordnet ist und damit verhindert, daß durch seitliches Ausweichen der Verstellschnecke 4 diese im Crashfall außer Eingriff mit der Verzahnung des Anschlages 20 gerät.

Die in Figur 9 dargestellte Verzahnung 22 wird vorzugsweise durch wechselseitige Prägung des Boden- oder Verbindungsteils des U-förmigen Profils der führenden Schiene 2 hergestellt, so daß wechselseitig eine konkave und konvexe Verformung des Verzahnungsprofils 22 resultiert.

In den Figuren 10 und 11 ist eine Ausführungsform dargestellt, bei der einem Verzahnungprofil 24 bzw. 27 zwei zur Aufnahme von Crashkräften dienende Anschläge 23, 25 bzw. 26, 28 in Form zusätzlicher Verzahnungen, die in die Verzahnung der Verstellschnecke 4 eingreifen, benachbart sind. Auch in dieser Ausführungsform wird bei einer Verlagerung der Verstellschnecke 4 infolge des Einwirkens von Crashkräften auf die geführte Schiene sichergestellt, daß ein Eingriff zumindest zwischen der Verzahnung der Verstellschnekke 4 und den zur Aufnahme der Crashkräfte dienenden Anschlägen 23, 25 bzw. 26, 28 erfolgt. Dabei gewährleistet die Schrägstellung der Anschläge 23, 25 bzw. 26, 28 einen das Durchrutschen der Verstellschnecke 4 verhindernden hinreichenden Eingriff der beiden Verzahnungen auch bei schräger Verschiebung der Verstellschnecke, so daß die geführte Schiene auch im Crashfall sicher arretiert bleibt.

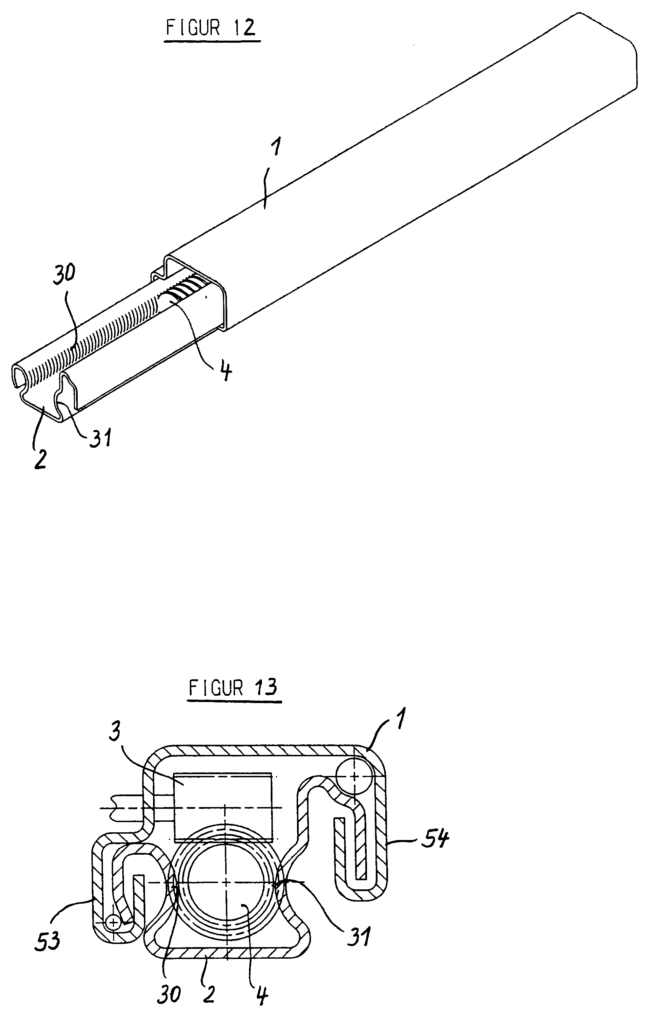

Die erfindungsgemäße Lösung läßt sich unabhängig von der Werkstoffwahl und Ausbildung der Schienenführung einsetzen. Während in den vorangegangenen Ausführungsbeispielen die ineinandergreifenden Schienen als Strangpreßprofile ausgebildet waren, handelt es sich bei den in den Figuren 12 bis 18 dargestellten und nachfolgend beschriebenen Ausführungsbeispielen um Schienen aus Stahlblech, bei denen das zur Aufnahme der Verstellkräfte vorgesehene Verzahnungsprofil bzw. zur Aufnahme der Crashkräfte vorgesehene Anschläge durch Prägen, Rändeln, Stanzen oder Fräsen hergestellt werden, wobei zusätzlich zur Herstellung des die Verstellkräfte aufnehmenden Verzahnungsprofil die Möglichkeit des Einsatzes von Einlegeteilen, insbesondere Kunststoff-Einlegeteilen besteht.

Figur 12 zeigt eine schematisch-perspektivische Darstellung und Figur 13 einen Querschnitt durch eine Schienenführung aus Stahlblech, bei der die freien Schenkel der U-förmigen Profile der führenden Schiene 2 und der geführten Schiene 1 in Verhakungsbereichen 53, 54 miteinander verbunden sind, die ein Ausreißen der Verbindung der beiden Schienen der Schienenführung verhindern. Zusätzlich vorgesehene Gleit- oder Wälzkörper verringern die Reibung bei der Längsverstellung der geführten Schiene 1.

Die führende Schiene 2 weist an ihren Schenkeln Verzahnungen 30, 31 auf, die in die Verzahnung der Verstellschnecke 4 eingreifen, die wiederum über ein Schneckenrad 3 mit einem motorischen Antrieb und fest mit der geführten Schiene 1 verbunden ist. Die Verzahnungen sind in Form von Prägungen oder Ausstanzungen hergestellt und dienen der Aufnahme der Verstellkräfte bzw. der Crash- oder Massenbeschleunigungskräfte im Falle von auf die geführte Schiene 1 einwirkenden Crashkräften.

Hierbei können beide Verzahnungen 30, 31 als der zur Aufnahme der Verstellkräfte dienende Verzahnungen ausgebildet sein und einen entsprechend festen Eingriff in die Verzahnung der Verstellschnecke 4 herstellen. Eine der beiden Verzahnungen kann aber auch durch lockere Passung ausschießlich als Anschlag dienen, so daß zum einen die Reibungsverhältnisse verbessert werden und zum anderen gleichwohl gewährleistet ist, daß im Crashfall ein sicherer Eingriff der Verzahnung der Verstellschnecke 4 in die Verzahnung des jeweiligen Anschlags gewährleistet ist.

In der Querschnittsdarstellung gemäß Figur 13 sind beide Verzahnungen 30, 31 in Höhe der Achse der Verstellschnecke angeordnet. Die den Anschlag bildende Verzahnung kann jedoch gegenüber der die Verzahnung zur Aufnahme der Verstellkräfte dienenden Verzahnung geringfügig höher angeordnet werden, so daß im Crashfall beim Anheben der Verstellschnecke 4 gegenüber dem Verbindungssteg der führenden Schiene 2 ein Eingriff der Verzahnung der Verstellschnecke 4 in die Verzahnung des betreffenden Anschlags zum Blockieren der Verstellschnecke 4 gewährleistet ist.

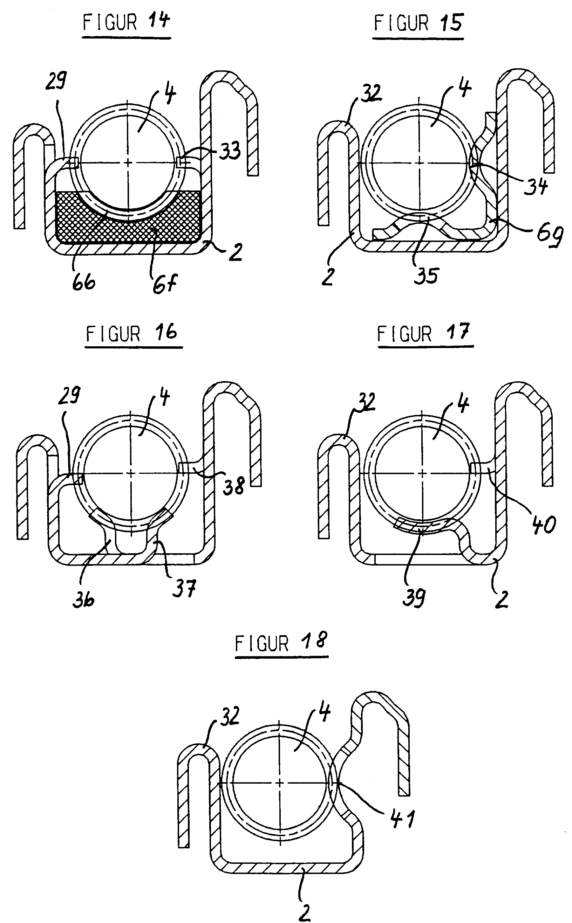

In den Figuren 14 bis 18 sind verschiedene weitere Varianten für Schienen aus Stahlblech dargestellt, bei denen die Ausbildung der Verzahnung zur Aufnahme der Verstellkräfte sowie die Ausbildung der Anschläge zur Aufnahme der Crashkräfte spezifisch für Schienenführungen aus Stahlblech sind, ohne daß die dargestellten Ausführungsbeispiele die verschiedenen Möglichkeiten erschöpfend wiedergeben.

Figur 14 zeigt einen Querschnitt durch eine führende Schiene 2, in deren Boden ein Einlegeteil 6f mit einer Verzahnung 66 zur Aufnahme der Verstellkräfte eingelegt ist. Zusätzliche, von den Schenkeln des U-förmigen Profils der führenden Schiene 2 abgewinkelte Laschen 29, 33 dienen als Anschläge in Form von in die Schneckenverzahnung des Schnekkenrades 4 vorzugsweise mit Spiel eingreifende Verzahnungen, deren Eingriff auch dann gewährleistet ist, wenn infolge von Crashkräften die geführte Schiene und damit die Verstellschnecke 4 aus der Verzahnung 66 des Einlegeteils 6f gehoben wird, so daß ein Durchrutschen der Verstellschnecke 4 und damit eine unkontrollierte Bewegung der geführten Schiene sicher verhindert wird.

Figur 15 zeigt eine Ausführungsform, bei der ein Stahlblech-Einlegeteil 6g fest mit dem Verbindungsschenkel und einem freien Schenkel der U-förmigen führenden Schiene 2 verbunden ist und im Bereich des Bodenteils eine die Verstellkräfte aufnehmende Verzahnung 35 ausbildet, die durch entsprechende Prägung bzw. Stanzung hergestellt wird. Während der eine freie Schenkel der U-förmigen führenden Schiene 2 als Widerlager 32 ausgebildet ist, weist der andere freie Schenkel eine Verzahnung zur Aufnahme der Crashkräfte 34 auf und gewährleistet einen Eingriff in diese Verzahnung auch beim Anheben der Verstellschnecke 4 aus der Verzahnung 35 zur Aufnahme der Verstellkräfte.

Dieser Eingriff wird auch dann sichergestellt, wenn ein schräges Ausheben der Verstellschnecke aus der Verzahnung erfolgt, da die zur Aufnahme der Crashkräfte dienende Verzahnung 34 einen hinreichend tiefen Eingriff in die Verzahnung der Verstellschnecke 4 gewährleistet und das Widerlager 32 ein unmittelbares Ausheben aus der Verzahnung 34 verhindert.

In Figur 16 ist eine Variante mit ausgestanzten Laschen zur Bildung der in die Verzahnung der Verstellschnecke 4 eingreifenden, zur Aufnahme der Verstellkräfte dienenden Verzahnung 36, 37 und in Form von Laschen 29, 38 zur Aufnahme der Crashkräfte dargestellt.

Die abgebogenen Laschen 36, 37, die am Verbindungsteil der U-förmigen führenden Schiene 2 angeordnet sind, sind wechselseitig zueinander versetzt, so daß die Stabilität der Verzahnung zur Aufnahme der Verstellkräfte erhöht wird. Die die Anschläge bildenden Laschen 29, 38 sind als in die Verzahnung der Verstellschnecke 4 eingreifende Laschen ausgebildet, wobei auch diese Laschen wechselseitig zueinander und auch in der Höhe zueinander versetzt sind, um einen sicheren Eingriff in die Verzahnung der Verstellschnecke 4 bei unterschiedlichen Richtungen des Aushebens der Verstellschnecke 4 aus der Verzahnung 36, 37 zur Aufnahme der Crashkräfte bei unterschiedlich wirkenden Massenbeschleunigungskräften zu gewährleisten.

Figur 17 zeigt eine Variante mit einem als Widerlager ausgebildeten Anschlag 32 sowie eine in die Verzahnung der Verstellschnecke 4 eingreifende, zur Aufnahme der Crashkräfte dienende Lasche 40, die aus dem anderen freien Schenkel herausgeprägt wurde. Die Verzahnung zur Aufnahme der Verstellkräfte ist als Lasche 39 ausgebildet, die aus dem Bodenteil der U-förmigen führenden Schiene 2 gestanzt ist und deren in die Verzahnung der Verstellschnecke 4 eingreifende Fläche dem Radius der Verstellschnecke 4 angepaßt wurde, so daß eine große Eingriffsfläche zur Aufnahme der Verstellkräfte geschaffen wird.

Schließlich zeigt Figur 18 eine Variante, bei der ein freier Schenkel der führenden Schiene 2 als Widerlager 32 ausgebildet ist, während in dem anderen freien Schenkel eine durch Prägen hergestellte Verzahnung 41 vorgesehen ist, die in die Verzahnung der Verstellschnecke 4 eingreift und sowohl zur Aufnahme der Crashkräfte als auch der Verstellkräfte dient, während das Widerlager 32 ein Heraustreten der Verzahnung der Verstellschnecke 4 aus der mit der führenden Schiene 2 verbundenen Verzahnung beim Einwirken von Crashkräften auf die mit der Verstellschnecke 4 verbundene führende Schiene verhindert.

## Patentansprüche

1. Schienenführung mit zwei in Längsrichtung gegeneinander verstellbaren Schienen (1, 2), die einen Hohlraum zwischen sich einschließen, in dem ein mit der einen Schiene (1) verbundenes Verstellelement (4) angeordnet ist, dessen Verzahnung in eine in Schienenlängsrichtung verlaufende Verzahnung (60) eingreift, mit der die andere Schiene (2) versehen oder verbunden ist, insbesondere für ein Schienenführungssystem für Kraftfahrzeugsitze,
**gekennzeichnet durch**
mindestens einen in Längsrichtung der die Verzahnung (60) aufweisenden Schiene (2) verlaufenden, als Widerlager ausgebildeten Anschlag, der in geringem Abstand zum Verstellelement (4) angeordnet ist und bei Auftreten von Crashkräften in das Verstellelement (4) eingreift.

2. Schienenführung mit zwei in Längsrichtung gegeneinander verstellbaren Schienen (1, 2), die einen Hohlraum zwischen sich einschließen, in dem ein mit der einen Schiene (1) verbundenes Verstellelement (4) angeordnet ist, dessen Verzahnung in eine in Schienenlängsrichtung verlaufende Verzahnung (60) eingreift, mit der die andere Schiene (2) versehen oder verbunden ist, insbesondere für ein Schienenführungssystem für Kraftfahrzeugsitze,
**gekennzeichnet durch**
mindestens einen in Längsrichtung der die Verzahnung (60) aufweisenden Schiene (2) verlaufenden, als Widerlager ausgebildeten und eine Verzahnung aufweisenden Anschlag, dessen Verzahnung mit Spiel zur Verzahnung des Verstellelements (4) angeordnet ist und bei Auftreten von Crashkräften in das Verstellelement (4) eingreift.

3. Schienenführung nach Anspruch 1 oder 2, **dadurch gekennzeichnet**, daß der Anschlag getrennt von der der Verstellung dienenden Verzahnung angeordnet und/oder einstückig mit dieser verbunden ist.

4. Schienenführung nach Anspruch 2, **dadurch gekennzeichnet,** daß die Verzahnung des Anschlags zur Aufnahme von Crashkräften
a) mit der der Verstellung dienenden Verzahnung übereinstimmt oder
b) übereinstimmende Bereiche mit der der Verstellung dienenden Verzahnung aufweist oder
c) ausschließlich zur Aufnahme von Crashkräften bestimmt und geeignet ist.

5. Schienenführung nach einem der vorangehenden Ansprüche, **dadurch gekennzeichnet,** daß im Querschnittsprofil der die Verzahnung aufweisenden Schiene (2) ein von der der Verstellung dienenden Verzahnung getrennter Anschlag in einem im wesentlichen gegenüber der Verzahnung liegenden Bereich angeordnet ist.

6. Schienenführung nach einem der vorangehenden Ansprüche, **dadurch gekennzeichnet,** daß die Verzahnung homogener Bestandteil der die Verzahnung aufweisenden Schiene (2) ist.

7. Schienenführung nach Anspruch 6, **dadurch gekennzeichnet,** daß die Verzahnung Teil einer Ausformung eines Strangpreßprofils ist.

8. Schienenführung nach Anspruch 6, **dadurch gekennzeichnet,** daß die Verzahnung durch Falze oder Ausstellungen einer Schiene (2) aus Stahlblech gebildet ist.

9. Schienenführung nach den Ansprüchen 6 bis 8, **dadurch gekennzeichnet,** daß die Verzahnung und der Anschlag durch Prägen, Rändeln, Stanzen oder Fräsen der dafür vorgesehenen Schienenbereiche hergestellt ist.

10. Schienenführung nach einem der vorangehenden Ansprüche 1 bis 5, **dadurch gekennzeichnet,** daß die Verzahnung aus einem Einlegeteil (6), vorzugsweise aus Kunststoff besteht, das in die die Verzahnung aufweisende Schiene (2) eingesetzt ist.

11. Schienenführung nach Anspruch 10, **dadurch gekennzeichnet,** daß sich die Verzahnung des Einlegeteils (6) zur Aufnahme der Verstellkräfte wenigstens auf einer Seite bis in den Bereich der horizontalen Achse des Verstellelements (4) erstreckt.

12. Schienenführung nach Anspruch 10 oder 11, **dadurch gekennzeichnet,** daß der Verzahnung des Einlegeteils (6) im gegenüberliegenden Bereich des Verstellelements (4) eine weitere Verzahnung zur Aufnahme der Crashkräfte bzw. ein Widerlager vorgesehen ist.

13. Schienenführung nach den Ansprüchen 10 bis 12, **dadurch gekennzeichnet,** daß das Einlegeteil (6) zur Aufnahme der Verstellkräfte ausschließlich mit dem unteren Teil des Verstellelements (4) in Eingriff steht, während dem Verstellelement (4) in der horizontalen Ebene wenigstens eine Verzahnung zur Aufnahme der Crashkräfte zugeordnet ist.

## Claims

1. Rail guide with two rails (1,2) longitudinally displaceable relative to each other and including between same a hollow space in which is mounted a displacement element (4) connected to one rail (1) wherein the teeth of the displacement element engage in the teeth (60) provided on or connected to the other rail (2) and running in the longitudinal direction of the rail, more particularly for a rail guide system for vehicle seats,
characterised by at least one stop formed as an abutment and running in the longitudinal direction of the rail (2) having the teeth (60) wherein this stop is mounted at a slight distance from the displacement element (4) and in the event of crash forces engages in the displacement element (4).

2. Rail guide with two rails (1,2) mounted longitudinally displaceable relative to each other and including between same a hollow space in which is mounted a displacement element (4) connected to a rail (1) wherein the teeth of the displacement element engage in the teeth provided on or connected to the other rail (2) and running in the longitudinal direction of the rail, more particularly for a rail guide system for motor vehicles,
characterised by at least one stop running in the longitudinal direction of the rail (2) having the teeth (60) wherein this stop is provided with teeth and is designed as an abutment, the teeth being mounted with play relative to the teeth of the displacement element (4) to engage in the displacement element (4) in the event of crash forces.

3. Rail guide according to claim 1 or 2 characterised in that the stop is mounted separate from the teeth serving for displacement and/or is connected integral with same.

4. Rail guide according to claim 2 characterised in that the teeth of the stop for absorbing crash forces
a) agree with the teeth serving for displacement or
b) have conforming areas with the teeth serving for the displacement or
c) are intended and suitable only for absorbing crash forces.

5. Rail guide according to one of the preceding claims, characterised in that in the cross-sectional profile of the rail (2) having the teeth a stop separate from the teeth serving for displacement is mounted in an area lying substantially opposite the teeth.

6. Rail guide according to one of the preceding claims, characterised in that the teeth are a homogeneous constituent part of the rail (2) having the teeth.

7. Rail guide according to claim 6 characterised in that the teeth are a part of a moulded area of an extruded profiled section.

8. Rail guide according to claim 6 characterised in that the teeth are formed by folding or making out a rail (2) from steel plate.

9. Rail guide according to claims 6 to 8 characterised in that the teeth and the stop are made by imprinting, milling, punching or edging the rail areas provided for this purpose.

10. Rail guide according to one of preceding claims 1 to 5 characterised in that the teeth consist of an insert part (6), preferably of plastics, which is inserted in the rail (2) having the teeth.

11. Rail guide according to claim 10 characterised in that the teeth of the insert part (6) for absorbing the displacement forces extend at least on one side up into the area of the horizontal axis of the displacement element (4).

12. Rail guide according to claim 10 or 11 characterised in that further teeth for absorbing the crash forces and an abutment are provided opposite the teeth of the insert part (6) in the opposing area of the displacement element (4).

13. Rail guide according to claims 10 to 12 characterised in that the insert part (6) for absorbing the displacement forces only engages with the lower part of the displacement element (4) whilst at least one set of teeth for absorbing the crash forces is allocated to the displacement element (4) in the horizontal plane.

## Revendications

1. Guidage de glissières comportant deux glissières (1, 2) qui peuvent être déplacées l'une par rapport à l'autre en direction longitudinale et qui comprennent entre elles une cavité dans laquelle est agencé un élément de déplacement (4) relié à une des glissières (1) et dont la denture entre en prise dans une denture (60) qui s'étend dans la direction longitudinale des glissières et dont l'autre glissière (2) est munie ou à laquelle cette dernière est reliée, en particulier pour un système de guidage de glissières pour des sièges de véhicule automobile, caractérisé par au moins un arrêt qui s'étend dans la direction longitudinale de la glissière (2) présentant la denture (60), qui est réalisé sous la forme d'une butée, qui est agencé à petite distance par rapport à l'élément de déplacement (4) et qui entre en prise dans l'élément de déplacement (4) lors d'une apparition de forces de collision.

2. Guidage de glissières comportant deux glissières (1, 2) qui peuvent être déplacées l'une par rapport à l'autre dans la direction longitudinale et qui comprennent entre elles une cavité dans laquelle est agencé un élément de déplacement (4) relié à l'une des glissières (1) et dont la denture entre en prise dans une denture (60) s'étendant dans la direction longitudinale des glissières et dont l'autre glissière (2) est munie ou à laquelle cette dernière est reliée, en particulier pour un système de guidage de glissières pour des sièges de véhicule automobile, caractérisé par au moins un arrêt qui s'étend dans la direction longitudinale de la glissière (2) présentant la denture (60), qui est réalisée sous la forme d'une butée, qui présente une denture et dont la denture est agencée avec un jeu par rapport à la denture de l'élément de déplacement (4) et entre en prise dans l'élément de réglage (4) lors d'une apparition de forces de collision.

3. Guidage de glissières suivant la revendication 1 ou 2, caractérisé en ce que l'arrêt est agencé de façon séparée de la denture qui sert au déplacement et/ou est relié à celle-ci sous la forme d'une pièce.

4. Guidage de glissières suivant la revendication 2, caractérisé en ce que la denture de l'arrêt pour recevoir des forces de collision
a) correspond à la denture servant au déplacement ou
b) présente, avec la denture servant au déplacement, des zones correspondantes ou
c) est déterminée et appropriée exclusivement pour recevoir des forces de collision.

5. Guidage de glissières suivant l'une des revendications précédentes, caractérisé en ce que dans le profil de section transversale de la glissière (2) qui présente la denture, un arrêt séparé de la denture servant au déplacement est agencé dans une zone située sensiblement à l'opposé de la denture.

6. Guidage de glissières suivant l'une des revendications précédentes, caractérisé en ce que la denture est une partie constitutive homogène de la glissière (2) présentant la denture.

7. Guidage de glissières suivant la revendication 6, caractérisé en ce que la denture est une partie d'un façonnage d'un profilé extrudé.

8. Guidage de glissières suivant la revendication 6, caractérisé en ce que la denture est formée par des plis ou des excroissances d'une glissière (2) en tôle d'acier.

9. Guidage de glissières suivant l'une des revendications 6 à 8, caractérisé en ce que la denture et l'arrêt sont réalisés par repoussage, moletage, poinçonnage ou fraisage des zones prévues pour cela des glissières.

10. Guidage de glissières suivant l'une des revendications précédentes 1 à 5, caractérisé en ce que la denture est constituée par un élément inséré (6), de préférence en matière synthétique, qui est inséré dans la glissière (2) présentant la denture.

11. Guidage de glissières suivant la revendication 10, caractérisé en ce que la denture de l'élément inséré (6) s'étend au moins sur un côté jusque dans la zone de l'axe horizontal de l'élément de déplacement (4), pour recevoir les forces de déplacement.

12. Guidage de glissières suivant la revendication 10 ou 11, caractérisé en ce que sur la denture de l'élément inséré (6), il est prévu dans la zone opposée de l'élément de déplacement (4) une autre denture pour recevoir les forces de collision ou respectivement une butée.

13. Guidage de glissières suivant l'une des revendications 10 à 12, caractérisé en ce que l'élément inséré (6) pour recevoir les forces de déplacement est exclusivement en prise avec la partie inférieure de l'élément de déplacement (4) alors qu'à l'élément de déplacement (4) il est adjoint dans le plan horizontal au moins une denture pour recevoir les forces de collision.
